(19) Europäisches Patentamt / European Patent Office / Office européen des brevets

(11) **EP 3 083 284 B1**

(12) **EUROPEAN PATENT SPECIFICATION**

(45) Date of publication and mention
of the grant of the patent:
**04.09.2019 Bulletin 2019/36**

(21) Application number: **14812473.8**

(22) Date of filing: **15.12.2014**

(51) Int Cl.:
**B60C 11/11** *(2006.01)* **B60C 11/12** *(2006.01)*
**B60C 11/13** *(2006.01)*

(86) International application number:
**PCT/EP2014/077709**

(87) International publication number:
**WO 2015/091331 (25.06.2015 Gazette 2015/25)**

(54) **TREAD BAND COMPRISING BLOCKS AND FINE GROOVES ON THE BLOCKS**

LAUFFLÄCHE MIT BLÖCKEN UND FEINEN RILLEN AUF DEN BLÖCKEN

BANDE DE ROULEMENT COMPRENANT DES BLOCS ET FINES RAINURES SUR LES BLOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2013 FR 1362808**

(43) Date of publication of application:
**26.10.2016 Bulletin 2016/43**

(73) Proprietor: **Compagnie Générale des
Etablissements Michelin
63000 Clermont-Ferrand (FR)**

(72) Inventor: **KANEKO, Shuichi
Tokyo 163-1073 (JP)**

(74) Representative: **Regimbeau
20, rue de Chazelles
75847 Paris Cedex 17 (FR)**

(56) References cited:
**EP-A2- 0 921 020        WO-A1-2013/092688
JP-A- 2008 055 974**

## Description

FIELD OF THE INVENTION

The present invention relates to a pneumatic tyre suitable for ice-bound or snow covered roads, and more particularly to a pneumatic tyre for ice-bound or snow covered roads, which has fine grooves formed in a tread surface.

PRIOR ART

Document WO 03089257 discloses a pneumatic tyre which has fine grooves formed in a tread surface for improve brake and drive performance on ice-bound roads in early periods of wear, and which prevents snow clogging in the fine grooves, thereby enabling a further enhancement of the effect of improving the brake and drive performance. The depth of the fine groove lies between 0,1 and 0,8 mm, the width of the fine groove lies between 0,1 and 0,8 mm and the pitch of these fine grooves lies between 0,5 and 2,0 mm. Document EP 0921020 A2 discloses a tread having two axially separate regions having different lateral thrust stiffness. Document JP 2008055974 A discloses a block having an edge portion made of a material having larger Young's modulus change with temperature than a material constituting a center portion. Document WO 2013/092688 A1 discloses a block provided with a covering material having an uncovered part extending from a leading corner over at least 1/3 of a height of the block.

It is an object of the prevent invention to more improve, in early periods of wear, brake and drive performance of a pneumatic tyre comprising fine grooves.

DEFINITIONS

"Tyre" is understood as any type of elastic tyre whether it is subjected to an internal pressure or not.

"Snow tyre" or "winter tyre" is understood as a tyre identified by the letters M+S or M.S or even M&S, marked on at least one of the sidewalls of the tyre. Said snow tyre is characterized by a design of the tread and a rubber composition which is primarily designed to provide, in mud and fresh or melting snow, improved behaviour than that of a road type tyre designed to travel on ground which is not covered with snow.

"Tread" of a tyre is understood as a quantity of rubber material defined by lateral surfaces and by two principal surfaces, one thereof being designed to come into contact with a road surface when the tyre is travelling.

"Block" is understood as relief element limited by some large grooves. Each block comprises a plurality of lateral faces and a contact face which is able to come into contact with the road when the tyre is rolling.

"Modulus of elasticity" of an elastic material is understood as the relationship between the variation in stress and the variation in deformation when said material is subjected to tractive or compressive forces.

SUMMARY OF THE INVENTION

The invention relates to a tread band made of rubber-like material for a tyre for winter travel. This tread band comprising a plurality of blocks, each block comprising a contact face designed to come into contact with the ground when the tyre travels, the contact face having a plurality of sipes formed therein and a plurality of fine grooves shallower than the sipes. Each block comprises a least one lateral face, this lateral face is covered by a covering material, the covering material having a modulus of elasticity which is greater than the modulus of elasticity of the rubber-like material forming the block.

The covering material increases the overall rigidity of the block, improving thus the action of the fine grooves on snow and ice. Consequently, brake and drive performance of a pneumatic tyre is improved.

In a variant, the fine grooves do not extend until the covering material.

Creation of cracks in the covering material is thus limited.

In a variant, the fine grooves extend obliquely.

It is possible to improve the action of the fine grooves on snow and ice, particularly, during a braking in a bend.

In a preferred embodiment, the covering material comprises an elastomeric material of which the dynamic shear modulus $G^*$ subjected to a maximum alternating stress of 0.7 MPa, at a frequency of 10 Hz and at a temperature of -10°C, is greater than 200 MPa and preferably greater than 300 MPa.

By using a covering material with such features, we improve the ability of the block to scrap the snow and ice on the road. Consequently, the adherence on a snow/ice road is improved.

In a variant, the covering material comprises an assembly of fibers.

By using fibers, we improve the resistance of the covering material.

BRIEF DESCRIPTION OF THE DRAWINGS

Other features and advantages of the invention will emerge from the following description, given by way of nonlimiting example, with reference to the attached drawings in which:

- **Figure 1** schematically depicts a block of a tread band according to the invention;
- **Figure 2** is a cut view along the line A-A' of the **figure 1;**
- **Figure 3** schematically depicts a block of a tread band according to a second embodiment of the invention;
- **Figure 4** schematically depicts a block of a tread band according to a third embodiment of the invention.

In the description that follows, elements that are substantially identical or similar will be denoted by identical references.

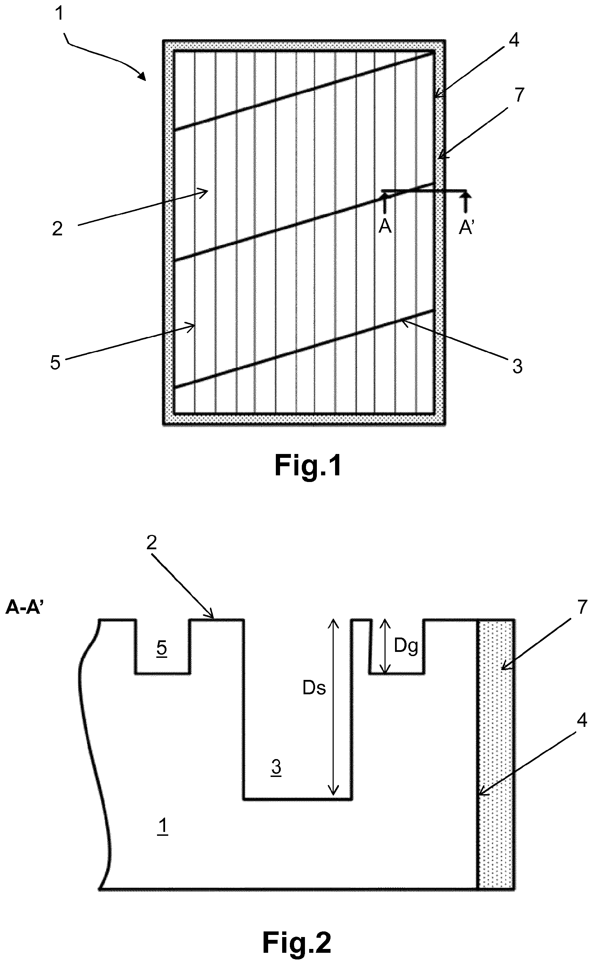

**Figure 1** depicts a block 1 of a tread band. This block 1 is made of rubber-like material for a tyre for a winter travel. The block 1 comprises a contact face 2 designed to come into contact with the ground when the tyre travels. This contact face 2 has a plurality of sipes 3. Indeed, this contact face 2 has a plurality of fine grooves 5.

**Figure 2** is a cut view along a line A-A' in the **Figure 1.** In this view, we can notice that the depth Dg of the fine grooves 5 is less important than the depth Ds of the sipe 3. Indeed, the width of the fine grooves is smaller than the width of the sipe 3. More particularly, the depth of the fine groove lies between 0,1 and 0,8 mm, the width of the fine groove lies between 0,1 and 0,8 mm and the pitch of these fine grooves lies between 0,5 and 3,0 mm. In a variant, the width of the fines grooves are equal to the width of the sipe 3.

The block 1 in the **figures 1** and **2** comprises four lateral faces 4. These lateral faces 4 are covered by a covering material 7. The covering material has a modulus of elasticity which is greater than the modulus of elasticity of the rubber-like material forming the block 1.

More particularly, the covering material comprises an elastomeric material of which the dynamic shear modulus G* subjected to a maximum alternating stress of 0.7 MPa, at a frequency of 10 Hz and at a temperature of -10°C, is greater than 200 MPa and preferably greater than 300 MPa. In the present document, the terms "modulus of elasticity G'" and "modulus of viscosity G''" denote the dynamic properties well known to the person skilled in the art. Said properties are measured on a Metravib VA4000 viscoanalyser on test specimens moulded from raw compositions. Test specimens such as those described in the ASTM D 5992-96 standard (version published September 2006, initially approved in 1996) in the figure X2.1 (circular embodiment) are used. The diameter of the test specimen is 10 mm (thus it has a circular section of 78.5 mm$^2$), the thickness of each of the portions of rubber-like composition is 2 mm, which provides a "diameter to thickness" ratio of 5 (in contrast to the ISO 2856 standard, cited in the ASTM standard, paragraph X2.4 which recommends a d/t value of 2). The response of a test specimen of a vulcanized rubber-like composition subjected to simple alternating sinusoidal shear stress, at a frequency of 10 Hz, is recorded. The test specimen is subjected to sinusoidal shear stress at 10 Hz, at controlled stress (0.7 MPa) symmetrically around its position of equilibrium. The measurement is carried out during a temperature ramp increasing by 1.5°C per minute, from a temperature Tmin lower than the glass transition temperature (Tg) of the material, up to a temperature Tmax which may correspond to the rubber plateau of the material. Before starting the scanning, the test specimen is stabilized at the temperature Tmin for 20 minutes to reach a uniform temperature within the test specimen. The result used is the dynamic shear modulus of elasticity (G') and the shear modulus of viscosity (G") at the selected temperatures (in this case 0°, 5° and 20°C). The "complex modulus" G* is defined as the absolute value of the complex sum of the modulus of elasticity G' and the modulus of viscosity G":

$$G^* = \sqrt{(G'^2 + G''^2)} \ .$$

In a variant, the elastomeric material of the covering layer comprises a composition based on at least one diene elastomer which is very highly laden with sulphur, such as ebonite.

In a variant, the covering material comprises an assembly of fibers, for example a three-dimensional assembly of fibres forming a felt. The fibres of said felt may be selected from the group of textile fibres and mineral fibres and a mixture thereof. It is also noteworthy that the fibres of said felt may be selected from textile fibres of natural origin, for example from the group of silk, cotton, bamboo, cellulose, wool fibres and mixtures thereof.

In a further variant, the elastomeric material of the covering layer comprises a composition based on at least one thermoplastic polymer, such as polyethylene terephthalate (PET). Such a polymer may have a Young's modulus of more than 1 GPa.

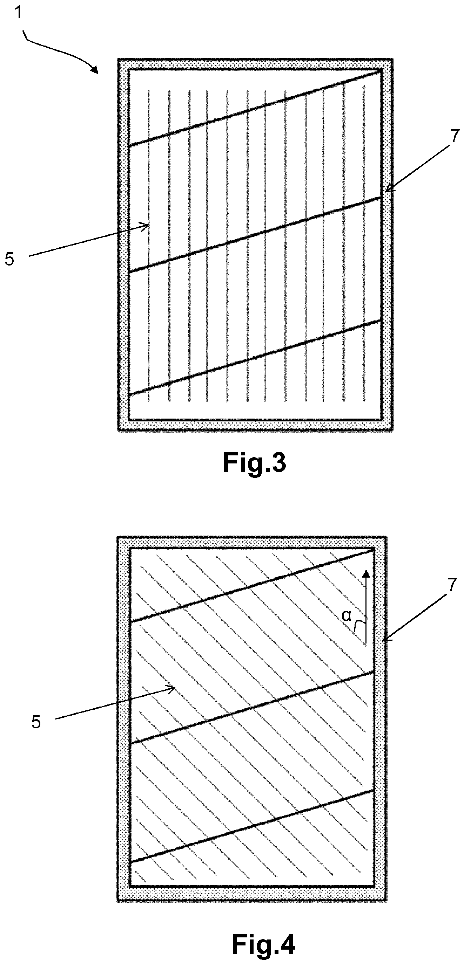

**Figure 3** depicts a block 1 of a tread band according to a second embodiment of the invention. In this second embodiment, the fine grooves 5 do not extend until the covering material 7.

**Figure 4** depicts a block 1 of a tread band according to a third embodiment of the invention. In this third embodiment, the fine grooves 5 extend obliquely. Thus, the angle α between the fine groove and a circumferential direction X, is less than 20°. More particularly, this angle α is less than or equal to 10°.

The invention is not restricted to the examples described and depicted and various modifications can be made thereto without departing from its subject matter as defined by the appended claims.

**Figure 1** and **figure 2** depict a block having lateral faces entirely covered by the covering material. In a variant, the lateral faces are partially covered by the covering material.

**Figure 3** and **figure 4** depict different embodiment in which the sipes and the fine grooves have between them a certain angle. All of angle combinations are possible between the sipes and the fine grooves.

**Claims**

1. Tread band made of rubber-like material for a tyre for winter travel, said tread band comprising a plurality of blocks (1), each block (1) comprising a contact face (2) designed to come into contact with the ground when the tyre travels, the contact face (2) having a plurality of sipes (3) formed therein and a plurality of fine grooves (5) shallower than the sipes (3), **characterized in that** each block (1) comprises at least one lateral face (4), this lateral face (4) being covered by a covering material (7), the covering material (7) having a modulus of elasticity which is greater than the modulus of elasticity of the rubber-like material forming the block (1).

2. Tread band according to claim 1, **characterized in that** the fine grooves (5) do not extend until the covering material (7) .

3. Tread band according to either of Claim 1 or 2, **characterized in that** the fine grooves (5) extend obliquely.

4. Tread band according to any one of Claims 1 to 3, **characterized in that** the covering material (7) comprises an elastomeric material of which the dynamic shear modulus G* subjected to a maximum alternating stress of 0.7 MPa, at a frequency of 10 Hz and at a temperature of -10°C, is greater than 200 MPa and preferably greater than 300 MPa.

5. Tread band according to any one of Claims 1 to 4, **characterized in that** the covering material (7) comprises an assembly of fibers.


**Patentansprüche**

1. Laufflächenband, das aus kautschukartigem Material hergestellt ist, für einen Reifen zum Fahren im Winter, wobei das Laufflächenband mehrere Blöcke (1) umfasst, wobei jeder Block (1) eine Kontaktfläche (2), die gestaltet ist, um mit dem Boden in Kontakt zu gelangen, wenn der Reifen fährt, wobei die Kontaktfläche (2) mehrere Lamellen (3), die darin gebildet sind, und mehrere feine Rillen (5) aufweist, die flacher als die Lamellen (3) sind, **dadurch gekennzeichnet, dass** jeder Block (1) mindestens eine seitliche Fläche (4) umfasst, wobei diese seitliche Fläche (4) durch ein Abdeckungsmaterial (7) bedeckt ist, wobei das Abdeckungsmaterial (7) ein Elastizitätsmodul aufweist, der höher ist als der Elastizitätsmodul des kautschukartigen Materials, das den Block (1) bildet.

2. Laufflächenband nach Anspruch 1, **dadurch gekennzeichnet, dass** die feinen Rillen (5) sich nicht bis zu dem Abdeckungsmaterial (7) erstrecken.

3. Laufflächenband nach entweder Anspruch 1 oder 2, **dadurch gekennzeichnet, dass** die feinen Rillen (5) sich schräg erstrecken.

4. Laufflächenband nach einem der Ansprüche 1 bis 3, **dadurch gekennzeichnet, dass** das Abdeckungsmaterial (7) ein Elastomermaterial umfasst, dessen elastischer Schubmodul G* unter einer maximalen Wechselspannung von 0,7 MPa bei einer Frequenz von 10 Hz und bei einer Temperatur von -10°C höher als 200 MPa und vorzugsweise höher als 300 MPa ist.

5. Laufflächenband nach einem der Ansprüche 1 bis 4, **dadurch gekennzeichnet, dass** das Abdeckungsmaterial (7) eine Baugruppe aus Fasern umfasst.


**Revendications**

1. Bande de roulement réalisée à partir d'un matériau de type caoutchouc pour un pneu d'hiver, ladite bande de roulement comprenant une pluralité de blocs (1), chaque bloc (1) comprenant une face de contact (2) conçue pour venir en contact avec le sol lorsque le pneu roule, la face de contact (2) ayant une pluralité de lamelles (3) formées à l'intérieur de cette dernière et une pluralité de fines rainures (5) moins profondes que les lamelles (3), **caractérisée en ce que** chaque bloc (1) comprend au moins une face latérale (4), cette face latérale (4) étant recouverte par un matériau de recouvrement (7), le matériau de recouvrement (7) ayant un module d'élasticité qui est supérieur au module d'élasticité du matériau de type caoutchouc formant le bloc (1).

2. Bande de roulement selon la revendication 1, **caractérisée en ce que** les fines rainures (5) ne s'étendent pas jusqu'au matériau de recouvrement (7).

3. Bande de roulement selon la revendication 1 ou 2, **caractérisée en ce que** les fines rainures (5) s'étendent de manière oblique.

4. Bande de roulement selon l'une quelconque des revendications 1 à 3, **caractérisée en ce que** le matériau de recouvrement (7) comprend un matériau élastomère dont le module de cisaillement dynamique G* soumis à une contrainte alternée maximum de 0,7 MPa, à une fréquence de 10 Hz et à une température de -10 °C, est supérieur à 200 MPa et de préférence supérieur à 300 MPa.

5. Bande de roulement selon l'une quelconque des revendications 1 à 4, **caractérisée en ce que** le matériau de recouvrement (7) comprend un ensemble de fibres.

**Fig.1**

A-A'

**Fig.2**

**Fig.3**

**Fig.4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03089257 A
- EP 0921020 A2
- JP 2008055974 A
- WO 2013092688 A1